# EUROPEAN PATENT APPLICATION

(11) **EP 1 867 866 A2**
(43) Date of publication of application: **19.12.2007**
(21) Application number: 07011277.6
(22) Date of filing: 08.06.2007
(51) Int. Cl.: F02M 31/125, F02M 51/06

(54) **Fuel injection system of internal combustion engine, and fuel injection method of the internal combustion engine**

(30) Priority: 12.06.2006 JP 2006162758
(71) Applicant: NISSAN MOTOR CO., LTD., Yokohama-shi Kanagawa-ken (JP)
(72) Inventor: Takafumi, Fukumoto, Atsugi-shi Kanagawa 243-0192 (JP); Hiroyuki, Kaneko, Atsugi-shi Kanagawa 243-0192 (JP); Norihiko, Kiritani, Atsugi-shi Kanagawa 243-0192 (JP); Ryuuta, Yamaguchi, Atsugi-shi Kanagawa 243-0192 (JP); Yuuichi, Igari, Atsugi-shi Kanagawa 243-0192 (JP)
(74) Representative: Grünecker, Kinkeldey, Stockmair & Schwanhäusser Anwaltssozietät

(57) **Abstract**

A fuel injection system of an internal combustion engine has an injector that injects fuel into an intake system or a combustion chamber of an internal combustion engine, and a pressurizing device that pressurizes the fuel to a predetermined pressure. Further, the system has a first heating device that heats the fuel on an upstream side of the injector, and a second heating device that further heats the fuel heated by the first heating device. The second heating device is provided in the injector. Furthermore, the system has a control device that controls the second heating device to heat up the fuel heated by the first heating device to a predetermined temperature.

## Description

### BACKGROUND OF THE INVENTION

### 1. Field of the Invention

The present invention relates to a fuel injection system that heats and pressurizes fuel, and injects the heated and pressurized fuel into a combustion chamber of an internal combustion engine.

### 2. Description of the Related Art

As a fuel injection system for a vehicle and the like, there is proposed the one using an injector that sets fuel into a high-temperature and high-pressure liquid state or a supercritical state and injects such fuel into a combustion chamber. By the injector described above, the fuel injected into the combustion chamber of the internal combustion engine is actively atomized and vaporized, and good combustion can be thereby realized. As such injector, there is the one disclosed in Japanese Patent Unexamined Publication No. H10-141170.

### BRIEF SUMMARY OF THE INVENTION

The conventional fuel injection system has a configuration in which the fuel is heated up from the room temperature only by the injector as described above. Therefore, necessary energy in the event of heating the fuel up to a predetermined temperature is large, it is inevitably necessary to supply large electric power to the fuel injection system, and the fuel injection system cannot help but being enlarged as an apparatus.

In addition, in the case of setting the fuel into the supercritical state, the fuel must be heated up to around 300°C. However, when a large amount of the fuel is supplied, for example, in such a case where the vehicle accelerates rapidly, it is necessary to heat up the supplied fuel quickly. Accordingly, a heating capacity becomes insufficient depending on an operation state of the fuel injection system, which may undesirably result in an occurrence of surge.

The present invention has been made in consideration for such a problem. It is an object of the present invention to provide a fuel injection system that reduces the energy to be supplied to a fuel-heating heater of the injector until the fuel is heated up to a predetermined high temperature, thereby realizing efficient fuel injection without placing a load on the injector.

The first aspect of the present invention provides a fuel injection system of an internal combustion engine comprising: an injector that injects fuel into an intake system or a combustion chamber of an internal combustion engine; a pressurizing device that pressurizes the fuel to a predetermined pressure; a first heating device that heats the fuel on an upstream side of the injector; a second heating device that further heats the fuel heated by the first heating device, the second heating device being provided in the injector; and a control device that controls the second heating device to heat up the fuel heated by the first heating device to a predetermined temperature.

The second aspect of the present invention provides A fuel injection method for injecting fuel by an injector into an intake system or combustion chamber of an internal combustion engine, the method comprising: pressurizing the fuel to a pressure necessary to set the fuel into a supercritical state; preheating the pressurized fuel on an upstream side of the injector; heating up the preheated fuel to a temperature at which the fuel is set into the supercritical state on a downstream side of a movable valve of the injector in synchronization with an action of the movable valve; and injecting the fuel in the supercritical state into the intake system or the combustion chamber.

### BRIEF DESCRIPTION OF THE SEVERAL VIEWS OF THE DRAWING

The invention will now be described with reference to the accompanying drawings wherein;
FIG. 1 is a schematic view showing an entire configuration of a first embodiment in the present invention;
FIG. 2 is a view showing a structure example of a heat exchanger;
FIG. 3 is a cross-sectional view showing a structure of a periphery of a jet orifice of an injector;
FIG. 4 is a partially cutaway view of a micro nozzle;
FIG. 5 is an enlarged cross-sectional view of an area A in FIG. 4;
FIG. 6 is a plan view of the micro nozzle;
FIG. 7 is an explanatory view showing a relationship of a state change of fuel with respect to accompanied pressurization and heating thereof;
FIG. 8A is an explanatory view showing an action of a fuel-heating heater in an embodiment of the present invention;
FIG. 8B is an explanatory view showing an action of a conventional fuel-heating heater;
FIG. 9 is a schematic view showing an entire configuration of a second embodiment in the present invention;
FIG. 10A is a plan view showing a structure example of a heat exchanger in the second embodiment;
FIG. 10B is a cross-sectional view taken along a line B-B of FIG. 10A;
FIG. 11 is a schematic view showing an entire configuration of a third embodiment in the present invention; and
FIG. 12 is a flowchart showing a control flow in the third embodiment.

### DETAILED DESCRIPTION OF THE INVENTION

Hereinafter, description will be made of embodiments of the present invention with reference to the drawings.

### (First Embodiment)

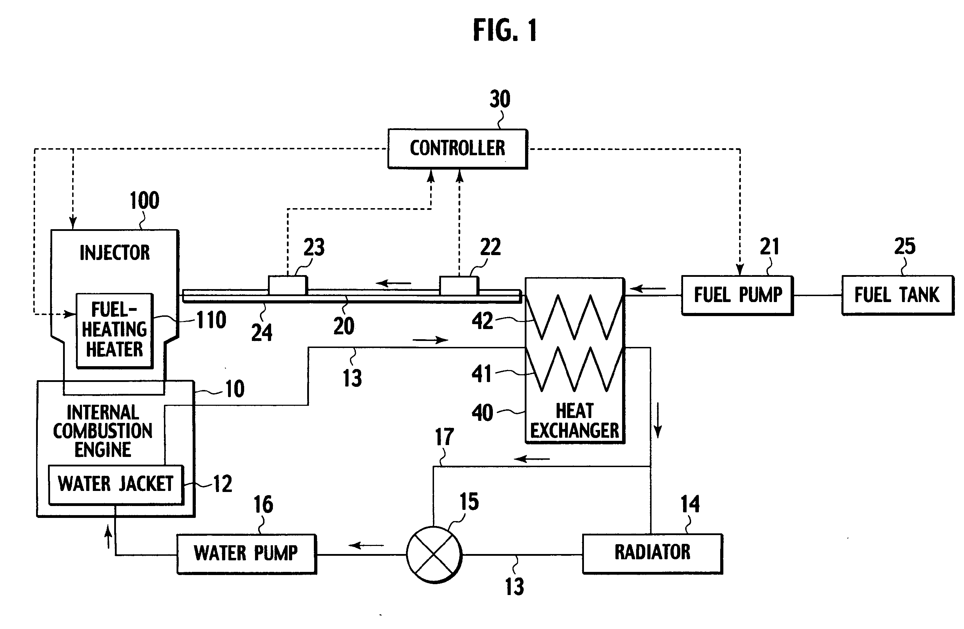

A description will be made of a first embodiment. FIG. 1 is a schematic view showing an entire configuration of a first embodiment.

Onto an internal combustion engine 10, an injector 100 in which a jet orifice is directed to a combustion chamber is attached. Fuel is supplied to the injector 100 through a fuel pipe 20.

A heat exchanger 40 is provided on the way of the fuel pipe 20. Further, on a fuel tank 25 side of the fuel pipe 20 from the heat exchanger 40, a fuel pump 21 that pressurizes the fuel and feeds the fuel with pressure is disposed. Arrows added to the fuel pipe 20 indicate a flowing direction of the fuel. Moreover, to the fuel pipe 20, there are added a pressure sensor 22 and a temperature sensor 23 on a downstream side of the heat exchanger 40, that is, on the injector 100 side. The pressure sensor 22 and the temperature sensor 23 detect a pressure and temperature of the fuel supplied to the injector 100.

The pressure sensor 22 and the temperature sensor 23 are connected to a controller 30. The controller 30 controls a fuel pump 21 and a fuel-heating heater 110, which is to be described later, based on the pressure and temperature of the fuel, which are detected by both of the sensors.

In particular, a portion of the fuel pipe 20 from the fuel pump 21 to the injector 100 is preferably set to be highly resistant to pressure. Moreover, preferably, at least a portion of the fuel pipe 20 from the heat exchanger 40 to the injector 100 is formed to have a heat insulating structure by coating a heat insulating material 24 thereon, and so on, and such fuel temperature is prevented from being affected by an ambience.

Note that, when the internal combustion engine 10 includes a plurality of cylinders, the fuel pipe 20 is branched toward the injectors of the respective cylinders on the downstream side of the heat exchanger 40. Preferably, the pressure sensor 22 and the temperature sensor 23 are provided close to the heat exchanger 40, where the fuel pipe 20 is not still branched.

In the internal combustion engine 10, combustion energy of the fuel is not entirely converted into drive force. Specifically, as radiant heat and exhaust heat in the cylinder, a part of the combustion energy heats a cylinder block and a cylinder head, and heats up structures of the internal combustion engine 10 to a high temperature. Therefore, to the internal combustion engine 10, there is added a cooling system for maintaining the internal combustion engine 10 within a predetermined temperature range.

As the cooling system of the internal combustion engine 10, a water jacket 12 that surrounds the cylinder and an exhaust passage is formed in the cylinder block and cylinder head of the internal combustion engine. In a coolant pipe 13 connected to the water jacket 12, there are arranged a radiator 14, a thermostat 15, and a water pump 16 that operates by the drive force of the internal combustion engine in an order of a flowing direction of a coolant. Moreover, around the radiator 14, a bypass pipe 17 is provided in parallel to the coolant pipe 13. Note that arrows added to the coolant pipe 13 indicate the flowing direction of the coolant.

At the time of a normal operation, the coolant that has absorbed, in the water jacket 12, heat generated in the internal combustion engine 10 radiates the heat in the radiator 14. Thereafter, the coolant returns to the water jacket 12 by the water pump 16. At the time of the normal operation, the coolant repeats such circulation. Note that, though not shown, a cooling fan that rotates by the drive force of the internal combustion engine 10 is added to the radiator 14.

Moreover, when the coolant is at a low temperature of a predetermined value or lower, for example, 80°C or lower at such a time when the internal combustion engine is started, the coolant is flown to the bypass pipe 17 by the thermostat 15. In such a way, the coolant is suppressed or inhibited from radiating the heat, thereby allowing the internal combustion engine to warm up early.

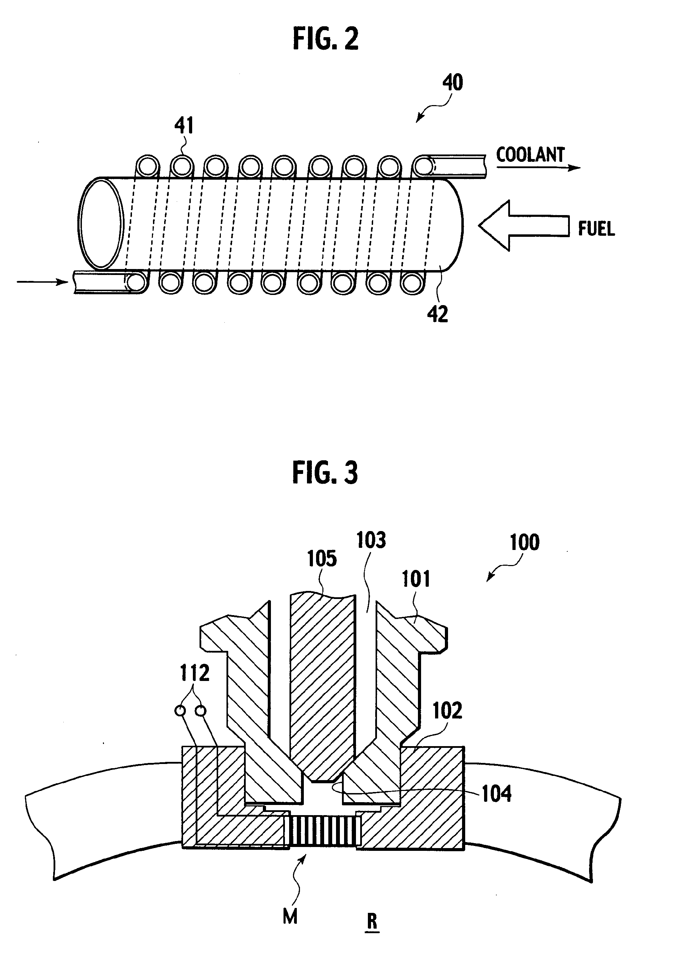

In this embodiment, the heat exchanger 40 is provided between the water jacket 12, and the radiator 14 and the bypass pipe 17. The heat exchanger 40 located on the way of the circulation of the coolant includes a fuel passage 42, and a coolant passage 41 that flows the coolant therethrough. FIG. 2 shows an example of a specific form of the fuel passage 42 and the coolant passage 41. The heat exchanger 40 is composed in such a manner that the coolant passage 41 is wound many times in a coil shape on an outer circumference of the straight fuel passage 42.

The fuel passage 42 is inserted between the injector 100 and the fuel pump 21 which is located on the fuel pipe 20, and the coolant passage 41 is inserted as described above between the water jacket 12 which is located on the coolant pipe 13, and the radiator 14 and the bypass pipe 17.

In the heat exchanger 40, as a heat source, the coolant that passes through the coolant passage 41 heats the fuel fed with pressure to the fuel passage 42 by the fuel pump 21. Note that a heat exchange amount between the fuel and the coolant becomes larger as a temperature difference therebetween is being larger, and accordingly, it is preferable to also increase a withstand pressure of the cooling system for the purpose of raising a boiling point of the coolant.

Next, in this embodiment, a micro nozzle M provided on the jet orifice of the injector 100 is used as the fuel-heating heater 110. A description will be made below of a configuration of the micro nozzle. FIG. 3 is a cross-sectional view showing a structure of a periphery of the jet orifice of the injector 100.

The injector 100 includes a casing 101. Then, in an inside of the casing 101, a hydraulic chamber 103 that reserves the fuel supplied thereto in a pressurized state is formed. On the combustion chamber R side (lower side in FIG. 3) of the casing 101, a flow rate adjustment hole 104 that communicates with the hydraulic chamber 103 is formed. In the hydraulic chamber 103, a movable valve 105 that is movable in the vertical direction of FIG. 3 is provided. Then, the flow rate adjustment hole 104 is opened and closed by a tip end of the movable valve 105 that moves up and down. By such vertical movement of the movable valve 105, a flow rate of the fuel injected from an inside of the hydraulic chamber 103 through the flow rate adjustment hole 104 is controlled.

Further on the combustion chamber R side from the flow rate adjustment hole 104 of the casing 101, that is, onto a most tip end of the jet orifice, a holding tool 102 is attached so as to cover the flow rate adjustment hole 104. Onto a position of the holding tool 102, which is opposite to an opening of the flow rate adjustment hole 104, the micro nozzle M is attached. Moreover, in the holding tool 102, electrodes 112 extended from the micro nozzle M are drawn outside.

The micro nozzle M is a nozzle that injects the fuel, which passes through through-holes provided therein, into the combustion chamber R (downward of the injector 100 in FIG. 3) while heating up the fuel. Specifically, with regard to the fuel supplied to the hydraulic chamber 103, the flow rate thereof injected from the flow rate adjustment hole 104 is controlled by such action of the movable valve 105. Then, the fuel injected from the flow rate adjustment hole 104 is heated up by the micro nozzle M, and is injected into the inside of the combustion chamber R.

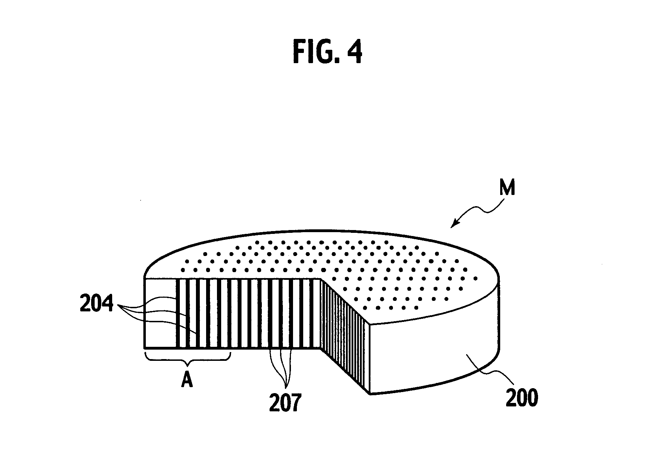

FIG. 4 is a partially cutaway view of the micro nozzle. The micro nozzle M is mainly composed of a semiconductor substrate (conductive substrate) 200 formed of silicon or the like in a columnar shape. In the semiconductor substrate 200, at least one through-hole 204 that connects both axial end surfaces (hereinafter, referred to as front and back surfaces) to each other is provided. Such through-holes 204 allow the flow rate adjustment hole 104 side and the combustion chamber R side to communicate with each other in a state where the micro nozzle M is held by the holding tool 102.

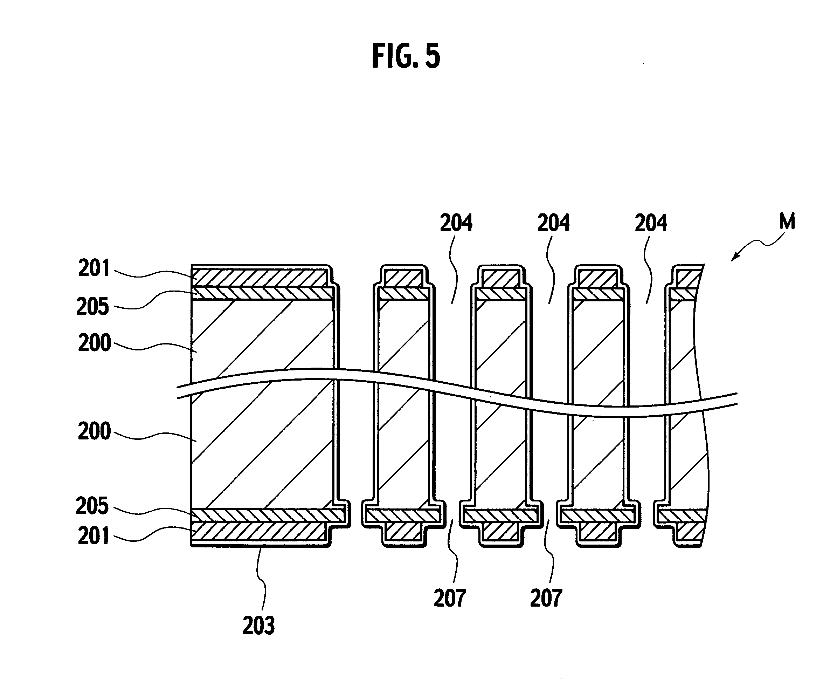

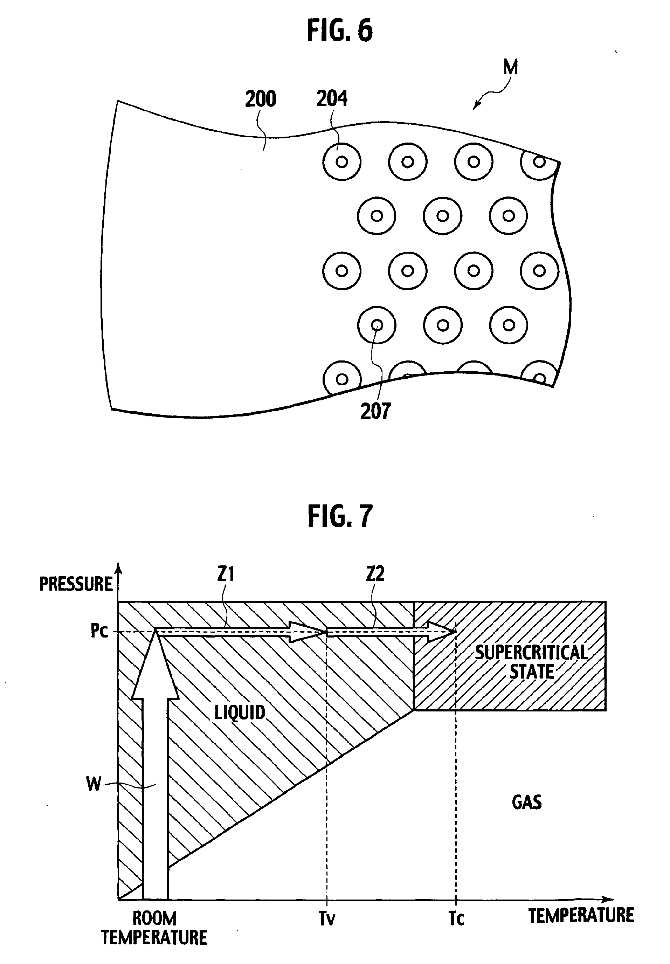

FIG. 5 is an enlarged view of an area A in FIG. 4, and FIG. 6 is a plan view of the micro nozzle. Note that FIG. 6 is a view for showing how the through-holes 204 are arranged, and the micro nozzle M is illustrated while omitting a protective film 203, outside-drawn electrodes 201, and high-concentration impurity layers 205, which will be described later.

The high-concentration impurity layers 205 are provided on the front and back surfaces of the semiconductor substrate 200 in which the plurality of through-holes 204 are formed, and further, the outside-drawn electrodes 201 are formed on the high-concentration impurity layers 205. The outside-drawn electrodes 201 are connected to the electrodes 112 provided on the holding tool 102. Moreover, an inner diameter of each opening of the through-holes 204 on the fuel injection side (lower side of FIG. 5) is reduced, and injection holes 207 are formed in the openings. Furthermore, inner circumferential surfaces of the through-holes 204 and the front and back surfaces of the semiconductor substrate 200, all of which are in contact with the fuel, are covered with the protective film 203 in order to prevent corrosion caused by the fuel. As the protective film 203, a material such as SiO₂ difficult to cause a chemical reaction with the fuel is used.

The semiconductor substrate 200 generates the heat when predetermined electric power is applied thereto. Specifically, when the predetermined electric power is applied to the outside-drawn electrodes 201 in synchronization with the action of the movable valve 105, currents flow in parallel to one another along all the through-holes 204 when the flow rate adjustment hole 104 is opened. Then, the semiconductor substrate 200 entirely generates the heat by the Joule heat. The fuel is fed with pressure from the above of FIG. 5. Since the injection holes 207, in each of which the inner diameter is reduced, are formed in the through-holes 204, it becomes possible to set the flow rate of the fuel appropriately. Then, the temperature of the fuel is raised instantaneously by the inner circumferential surfaces of the through-holes 204, thus making it possible to inject the fuel in a high-temperature and high-pressure state from the injection holes 207 into the combustion chamber R of the internal combustion engine.

The fuel injection system configured as described above operates as follows.

The controller 30 performs a feedback control for the fuel pump 21 based on the pressure of the fuel, which is detected by the pressure sensor 22, so as to pressurize the fuel to a pressure Pc necessary to set the fuel into a supercritical state. The fuel pressurized by the fuel pump 21 passes through the heat exchanger 40. As described above, the fuel is heated, that is, preheated by the heat of the coolant during a period while passing through the heat exchanger 40. The controller 30 decides a temperature, to which the fuel is to be heated up by the fuel-heating heater 110 (micro nozzle M) of the injector 100, based on the temperature of the fuel, which is detected by the temperature sensor 23. Specifically, as shown in FIG. 7, when the temperature of the fuel, which is for injecting the fuel into the combustion chamber in the supercritical state, is defined as Tc, and when the temperature detected by the temperature sensor 23 is Tv, the fuel is heated up by a difference (Tc-Tv) therebetween by means of the fuel-heating heater 110. Then, the controller 30 controls the electric power to be applied to the fuel-heating heater 110 so that the temperature of the fuel can reach Tc. In FIG. 7, symbol W denotes an amount of pressurization by the fuel pump 21, symbol Z1 denotes an amount of temperature rise by the heat exchanger 40, and symbol Z2 denotes an amount of temperature rise by the fuel-heating heater 110.

Note that, in this embodiment, the heat exchanger 40 applies to a first heating device, and the fuel-heating heater 110 applies to a second heating device. Moreover, the fuel pump 21 applies to a pressurizing device. Then, the controller 30 that controls the fuel-heating heater 110 based on the temperature of the fuel heated by the heat exchanger 40 applies to a control device.

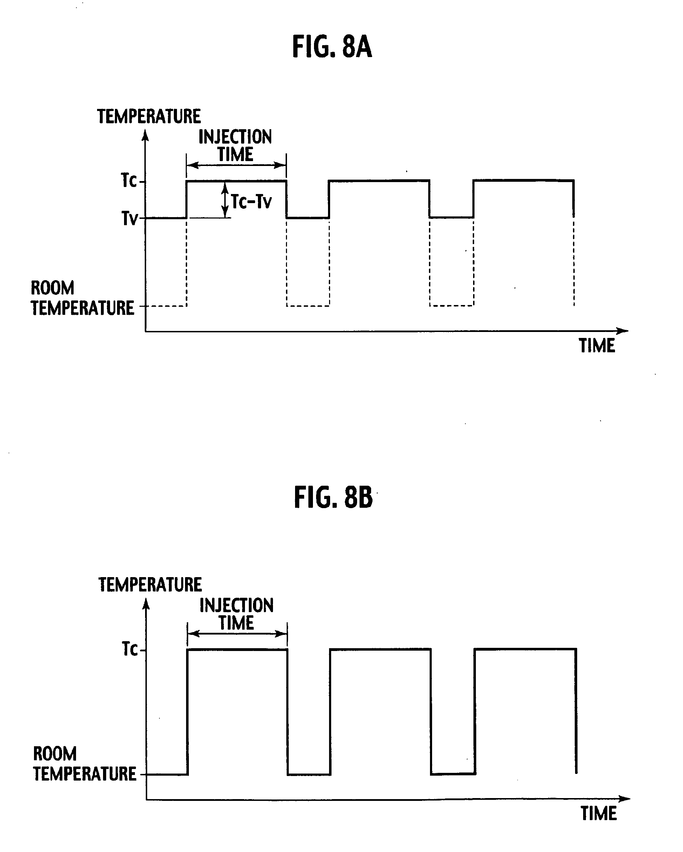

In this embodiment, the fuel pressurized by the fuel pump 21 is preheated by the heat exchanger 40 on the upstream side of the injector 100. Thereafter, the fuel to be injected into the combustion chamber is heated by the fuel-heating heater 110 provided in the injector 100. As described above, in this embodiment, the heating of the fuel is performed at two stages. As a result, in a comparative example shown in FIG. 8B, it is difficult to obtain a high response from the injector 100 since large energy is necessary to heat up the fuel from the room temperature (25°C) to the necessary temperature (Tc). However, as shown in FIG. 8A, in this embodiment, the fuel-heating heater 110 just needs to heat up the fuel by the difference (Tc-Tv) obtained by subtracting such amount of preheat from such total energy necessary for the injection, and the energy for the heating by the fuel-heating heater 110 is reduced. Specifically, the electric power for the heating is reduced, and the heating time to the necessary temperature is also shortened. Therefore, even if consumed fuel per time is large, for example, in such a case where a vehicle accelerates rapidly, the fuel can be heated up with a high response in synchronization with the injection without placing a load on the fuel-heating heater.

Moreover, the heat exchanger 40 is inserted to the fuel pipe 20 connected to the injector 100 and to the coolant pipe 13 connected to the internal combustion engine 10. Moreover, the heat exchanger 40 includes the fuel passage 42 that flows the fuel therethrough, and the coolant passage 41 that flows the coolant of the internal combustion engine 10 therethrough, and performs heat exchange between the coolant and the fuel. Hence, what is required for installing the heat exchanger 40 is to just insert the heat exchanger 40 onto the way of the existing cooling system. Moreover, exhaust heat that has been discarded wastefully from the internal combustion engine 10 is utilized effectively, and accordingly, such a new preheating device that requires the electric power separately is not necessary.

Furthermore, the heat is radiated from the coolant to the fuel in the heat exchanger 40, also leading to a reduction of a drive time of the cooling fan, resulting in an enhancement of the fuel consumption. Note that, since the fuel pump 21 is disposed on the upstream side of the heat exchanger 40, and pressurizes the fuel, the boiling point of the fuel in the heat exchanger 40 is raised, and the fuel can be preheated to the high temperature without being boiled.

Moreover, as the fuel-heating heater 110, the micro nozzle M provided on the downstream side of the movable valve 105 is used. Therefore, when the electric power is applied to the outside-drawn electrodes 201, the semiconductor substrate 200 generates the heat, and thereafter, the fuel passes through the plurality of through-holes 204 provided in the semiconductor substrate 200. Therefore, the heat from the semiconductor substrate 200 is easily transmitted to the fuel, thus making it possible to shorten the heating time of the fuel. Furthermore, the fuel in the high-temperature and high-pressure state, which is heated up by the micro nozzle M, is directly injected into the combustion chamber R, and accordingly, the high-temperature state of the fuel is maintained, and the fuel is supplied to the combustion chamber R. Then, in particular, the fuel is pressurized by the fuel pump 21 to the pressure necessary to set the fuel into the supercritical state, and the temperature of the fuel is raised by the fuel-heating heater 110 to the temperature at which the fuel finally turns to the supercritical state. Therefore, internal energy of the fuel is increased more than that of the fuel in a gaseous state. When the fuel is injected, vaporization thereof is promoted to a large extent, and the fuel in the combustion chamber is atomized, thus making it possible to improve the combustion state.

### (Second Embodiment)

Next, a description will be made of a second embodiment. Note that, with regard to a configuration of this embodiment, the same reference numerals are assigned to similar portions to those of the first embodiment in the drawings, and a duplicate description will be omitted.

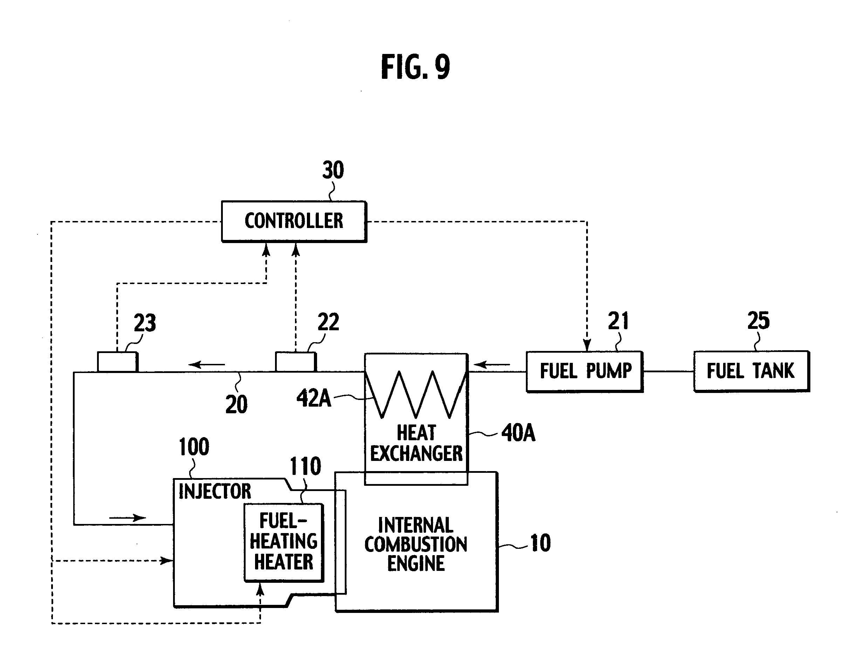

FIG. 9 is a schematic view showing an entire configuration of the second embodiment. In the second embodiment, an outer wall of the internal combustion engine is used as the heat source of the heat exchanger in place of the coolant.

Onto the internal combustion engine 10, the injector 100 in which the jet orifice is directed to the combustion chamber (not shown) is attached. To the injector 100, the fuel is supplied through the fuel pipe 20. The injector 100 is the same as that in the first embodiment, and in the jet orifice, includes the micro nozzle M as the fuel-heating heater 110 that heats the fuel. On the way of the fuel pipe 20, a heat exchanger 40A formed on the outer wall of the internal combustion engine 10 is provided. Moreover, on the fuel tank 25 side from the heat exchanger 40A, the fuel pump 21 that pressurizes the fuel and feeds the fuel with pressure is disposed. Moreover, to the fuel pipe 20, there are added the pressure sensor 22 and the temperature sensor 23 on the downstream side of the heat exchanger 40A, that is, on the injector 100 side. The pressure sensor 22 and the temperature sensor 23 detect the pressure and temperature of the fuel supplied to the injector 100. The pressure senor 22 and the temperature sensor 23 are connected to the controller 30, and the controller 30 controls the fuel-heating heater 110 and the fuel pump 21 based on the pressure and temperature of the fuel, which are detected by both of the sensors. Furthermore, for the fuel-heating heater 110, the micro nozzle M is used. This embodiment is the same as the first embodiment except the heat exchanger 40A. Note that, since the coolant is not used as the heat source for heating the fuel in this embodiment, the cooling system is not shown in FIG. 9.

The heat exchanger 40A is composed by forming a fuel passage 42A on the outer wall of the internal combustion engine 10, and in particular, on walls of the cylinder head, the cylinder block, and the like. The fuel passage 42A is disposed on the way of the fuel pipe 20.

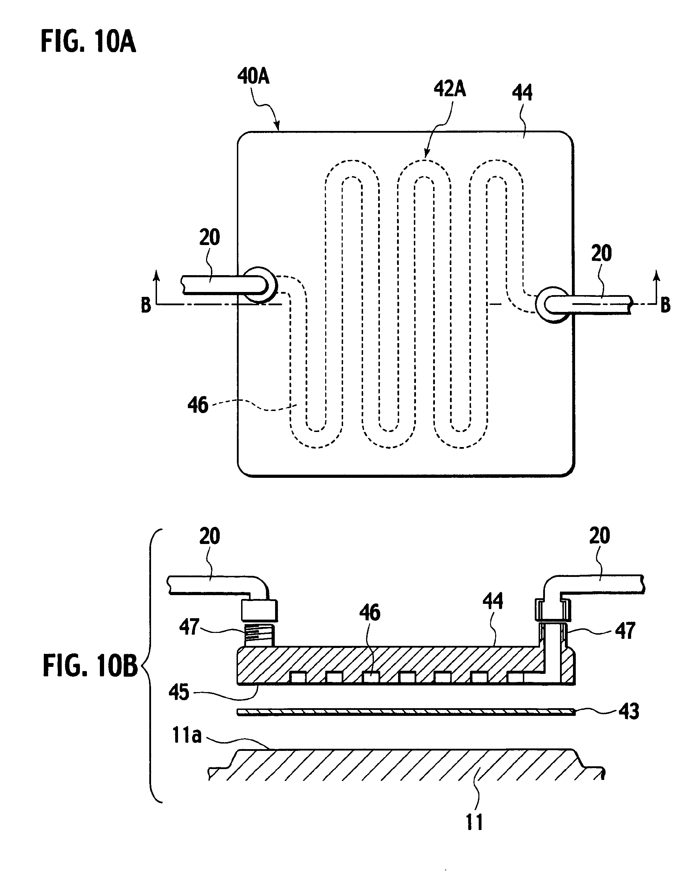

FIGS. 10A and 10B show a configuration of the heat exchanger 40A. FIG. 10B is a cross-sectional view taken along a line B-B in FIG. 10A. As shown in FIG. 10B, the heat exchanger 40A is composed by attaching a passage block 44 onto a flat surface 11 a formed on the outer wall 11 of the internal combustion engine 10 while sandwiching a seal gasket 43 therebetween. Note that FIG. 10B shows a decomposed state of the heat exchanger 40A before the passage block 44 is assembled thereto.

In the passage block 44, a groove 46 is formed on a mating surface 45 thereof with the flat surface 11 a. In such a way, as shown in FIG. 10A, the meandering fuel passage 42A that is difficult to form in casting can be obtained. The fuel passage 42A can obtain a large passage length by the meandering passage of the groove 46, and can increase the heat exchange amount.

On both ends of the fuel passage 42A, connectors 47 erected from outer side surfaces of the passage block 44 are provided, and individually serve as connection portions with the upstream side (fuel pump 21 side) of the fuel pipe 20 and the downstream side (injector 100 side) thereof. Note that, in FIG. 10A and 10B, bolts and the like for fixing the passage block 44 to the flat surface 11 a of the outer wall 11 of the internal combustion engine 10 are not shown.

A fuel injection system configured as described above operates as follows.

The controller 30 performs the feedback control for the fuel pump 21 based on the pressure of the fuel, which is detected by the pressure sensor 22, so as to pressurize the fuel to the pressure Pc necessary to set the fuel into the supercritical state. The fuel pressurized by the fuel pump 21 passes through the heat exchanger 40A. The fuel passage 42A of the heat exchanger 40A is formed of the flat surface 11 a of the internal combustion engine 10 and the groove 46 of the passage block 44. Therefore, the fuel directly contacts the high-temperature outer wall 11 of the internal combustion engine 10 and heats up during a period while passing through the heat exchanger 40A. The controller 30 decides the temperature, to which the fuel is to be heated up by the fuel-heating heater 110 (micro nozzle) of the injector 100, based on the temperature of the fuel, which is detected by the temperature sensor 23. Specifically, when the target temperature is defined as Tc, and when the temperature detected by the temperature sensor 23 is Tv, the fuel is heated up by the difference (Tc-Tv) therebetween by means of the fuel-heating heater 110, and such control is similar to that of the first embodiment. In this embodiment, the heat exchanger 40A applies to the first heating device, and the fuel-heating heater 110 applies to the second heating device. Moreover, the fuel pump 21 applies to the pressurizing device.

In this embodiment, the fuel pressurized by the fuel pump 21 is heated at two stages by the heat exchanger 40A on the upstream side of the injector 100 and by the fuel-heating heater 110 provided in the injector 100. Therefore, the energy for the heating by the fuel-heating heater 110 is reduced. Specifically, the electric power for the heating is reduced, and even if the consumed fuel is large in such a case where the vehicle accelerates rapidly, the fuel can be heated up without placing the load on the fuel-heating heater 110. Moreover, for the fuel-heating heater 110, the micro nozzle M provided on the downstream side of the movable valve 105 is used. Therefore, the heating time of the fuel can be shortened. In addition, the fuel in the high-temperature and high-pressure state, which is heated up by the micro nozzle, is directly injected into the combustion chamber by the micro nozzle, and accordingly, the fuel is supplied to the combustion chamber while maintaining the high-temperature state thereof. Moreover, the fuel is pressurized to the pressure necessary to set the fuel into the supercritical state, and the temperature of the fuel is raised to the temperature at which the fuel finally turns to the supercritical state. Therefore, the atomization and evaporation of the fuel in the combustion chamber can be promoted to a large extent, thus making it possible to improve the combustion state.

Moreover, in particular, the heat exchanger 40A contacts the outer wall 11 of the internal combustion engine 10, and forms the fuel passage 42A, and the fuel is directly heated from the outer wall 11. Therefore, the heat that has been discarded wastefully from the internal combustion engine 10 is utilized effectively, and the new preheating device that requires the electric power separately becomes unnecessary. Moreover, in comparison with the heat exchanger of the first embodiment, which uses the coolant as the heat source, the heat exchanger 40A has an advantage in that the heating of the fuel is started immediately even at the time when the internal combustion engine is started.

### (Third Embodiment)

Next, a description will be made of a third embodiment. Note that, with regard to a configuration of this embodiment, the same reference numerals are assigned to similar portions to those of the first embodiment in the drawings, and a duplicate description will be omitted.

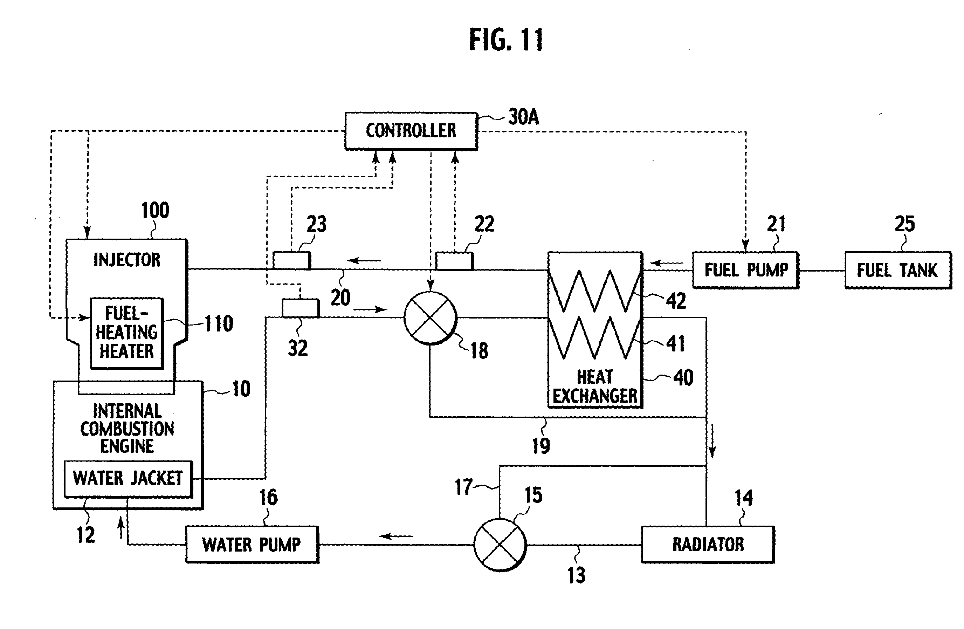

FIG. 11 is a schematic view showing an entire configuration of the third embodiment. In the third embodiment, the coolant is used as the heat source of the heat exchanger in a similar way to the first embodiment.

On the way of the fuel pipe 20, a heat exchanger 40 that is similar to the one in the first embodiment is provided, and further, on the fuel tank side of the heat exchanger 40, the fuel pump 21 that pressurizes the fuel and feeds the fuel with pressure is disposed. Moreover, to the fuel pipe 20, there are added the pressure sensor 22 and the temperature sensor 23 on the downstream side of the heat exchanger 40, that is, on the injector 100 side. The pressure sensor 22 and the temperature sensor 23 detect the pressure and temperature of the fuel supplied to the injector 100. The pressure sensor 22 and the temperature sensor 23 are connected to a controller 30A. The controller 30A controls the fuel-heating heater 110 and the fuel pump 21 based on the pressure and temperature of the fuel, which are detected by both of the sensors.

In this embodiment, as the cooling system of the internal combustion engine 10, a flow control valve 18 is provided between the water jacket 12 in the cooling system of the first embodiment and the heat exchanger 40. Then, a bypass pipe 19 that detours around the heat exchanger 40 is connected to the flow control valve 18. Moreover, to the coolant pipe 13, there is added a coolant temperature sensor 32 on the water jacket 12 side of the flow control valve 18. Note that the coolant temperature sensor 32 and the flow control valve 18 are connected to the controller 30A.

Other configurations including a point that the micro nozzle M is provided as the fuel-heating heater 110 in the jet orifice of the injector 100 are the same as those of the first embodiment.

The fuel injection system configured as described above operates as follows.

The controller 30A performs the feedback control for the fuel pump 21 based on the pressure of the fuel, which is detected by the pressure sensor 22, so as to pressurize the fuel to the pressure Pc necessary to set the fuel into the supercritical state. The fuel pressurized by the fuel pump 21 is heated up by the heat of the coolant during the period while passing through the heat exchanger 40.

The controller 30A monitors the temperature of the coolant by an output of the coolant temperature sensor 32, controls the flow control valve 18 in response to the temperature of the coolant, and controls the flow rate of the coolant to the heat exchanger 40. Specifically, as the temperature of the coolant is higher, the controller 30A reduces the flow rate of the coolant to the heat exchanger 40, and flows the rest of the coolant to the bypass pipe 19. In such a way, the controller 30A performs the control so that the temperature of the fuel heated by the heat exchanger 40 can be maintained at a predetermined temperature T1 lower than the boiling point.

Then, the controller 30A determines that a difference between the temperature Tc of the fuel, which is for injecting the fuel into the combustion chamber in the supercritical state, and the predetermined temperature T1 of the fuel, which is raised by the heat exchanger 40. The difference is the temperature, to which the fuel is to be heated by the fuel-heating heater 110 (micro nozzle) of the injector. Further, the controller 30A applies the electric power to the fuel-heating heater 110 by an amount corresponding to the difference.

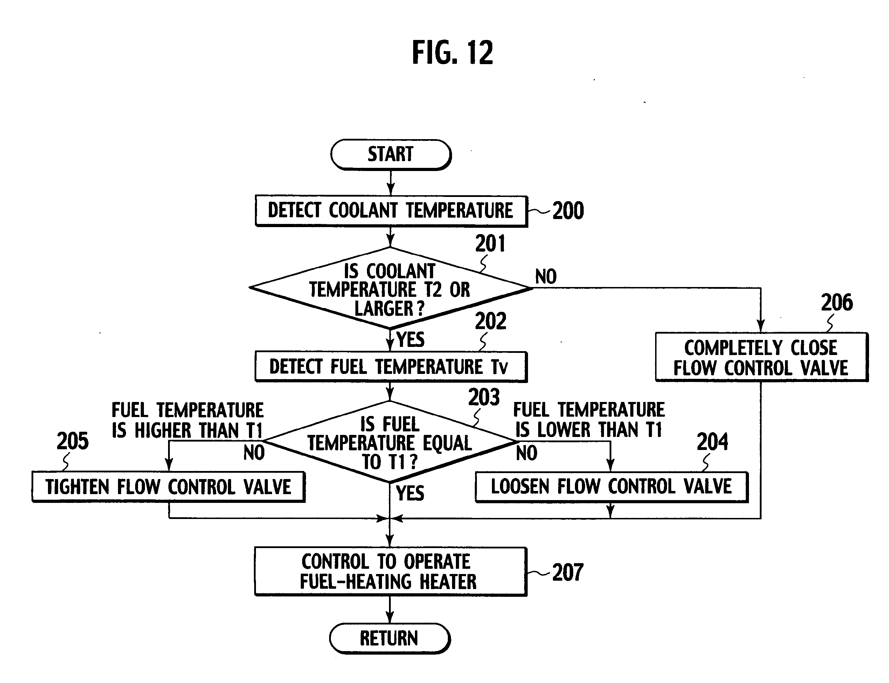

FIG. 12 is a flowchart showing a detailed.flow of the control by the above-described controller 30A. First, in Step 200, the controller 30A detects the temperature of the coolant that is to flow into the heat exchanger 40 from the water jacket 12 based on the output from the coolant temperature sensor 32. Thereafter, the controller 30A checks in Step 201 whether or not the temperature of the coolant is a predetermined value T2 or higher. The predetermined value T2 is preset as a value at which it is possible to sufficiently exchange the heat between the coolant and the fuel.

During a period while the temperature of the coolant is lower than the predetermined value T2, the controller 30A proceeds to Step 206, completely closes the flow control valve 18, that is, entirely flows the coolant to the bypass pipe 19, and then proceeds to Step 207. This is for completing the warming up early without radiating the heat in the heat exchanger 40.

When the temperature of the coolant is the predetermined value T2 or higher, the controller 30A proceeds to Step 202, and detects the temperature Tv of the fuel that has come out of the heat exchanger 40 based on the output of the temperature sensor 23. Then, the controller 30A checks in Step 203 whether or not the temperature of the fuel is the predetermined value T1 higher than the value T2.

When the temperature of the fuel is the predetermined value T1, the controller 30A directly proceeds to Step 207. When the temperature of the fuel is lower than the predetermined value T1, the controller 30A loosens the flow control valve 18 by a predetermined amount, and then proceeds to Step 207. In such a way, the flow rate of the coolant to the heat exchanger 40 is increased. Meanwhile, when the temperature of the fuel is higher than the predetermined value T1, the controller 30A tightens the flow control valve 18 by a predetermined amount, and then proceeds to Step 207. In such a way, the flow rate of the coolant to the heat exchanger 40 is reduced.

In Step 207, the controller 30A applies, to the fuel-heating heater 110, the electric power necessary to heat the fuel from the temperature Tv to the temperature Tc corresponding to the supercritical state in synchronization with the action of the movable valve 105 of the injector 100, and controls the action of the fuel-heating heater 110. Specifically, the controller 30A applies, to the fuel-heating heater 110, the electric power necessary to raise the temperature by (Tc-Tv).

By repeating the above-described steps, the temperature of the fuel heated by the heat exchanger 40 is converged to the predetermined value T1. Hence, thereafter, the fuel-heating heater 110 just needs to heat up the fuel by a constant value (Tc-T1), and it becomes unnecessary for the controller 30A to adjust the electric power to the fuel-heating heater 110 except for a short time when the internal combustion engine is started.

Note that, in this embodiment, the heat exchanger 40 applies to the first heating device, and the fuel-heating heater 110 applies to the second heating device. Moreover, the fuel pump 21 applies to the pressurizing device. Then, the controller 30A, that controls the flow control valve 18 based on the temperature of the coolant, adjusts the flow rate of the coolant flown through the heat exchanger 40, and heats up the fuel to the constant temperature, applies to the control device.

In this embodiment, the fuel pressurized by the fuel pump 21 is heated at two stages by the heat exchanger 40 on the upstream side of the injector 100 and the fuel-heating heater 110 provided in the injector 100. Therefore, the energy for the heating by the fuel-heating heater 110 is reduced. In such a way, the electric power for the heating is reduced, and even if the consumed fuel is large in such a case where the vehicle accelerates rapidly, the fuel can be heated up without placing the load on the fuel-heating heater 110. Moreover, for the fuel-heating heater 110, the micro nozzle M provided on the downstream side of the movable valve 105 is used. Therefore, the heating time of the fuel can be shortened. In addition, the fuel in the high-temperature and high-pressure state, which is heated up by the micro nozzle, is directly injected into the combustion chamber, and accordingly, the fuel is supplied to the combustion chamber while maintaining the high-temperature state thereof. Moreover, the fuel is pressurized to the pressure necessary to set the fuel into the supercritical state, and the temperature of the fuel is raised to the temperature at which the fuel finally turns to the supercritical state. Therefore, the atomization and evaporation of the fuel in the combustion chamber can be promoted to a large extent, thus making it possible to improve the combustion state.

Moreover, the heat exchanger 40 is inserted to the fuel pipe 20 of the injector 100 and to the coolant pipe 13 of the internal combustion engine 10. Moreover, the heat exchanger 40 includes the fuel passage 42 that flows the fuel therethrough, and the coolant passage 41 that flows the coolant of the internal combustion engine 10 therethrough, and performs the heat exchange between the coolant and the fuel. Hence, what is required for installing the heat exchanger 40 is to just insert the heat exchanger 40 onto the way of the existing cooling system. Moreover, the exhaust heat that has been discarded wastefully from the internal combustion engine 10 is utilized effectively, and accordingly, the new preheating device that requires the electric power separately is not necessary. Furthermore, the heat is radiated from the coolant to the fuel in the heat exchanger 40, also leading to the reduction of the drive time of the cooling fan, resulting in the enhancement of the fuel consumption.

Moreover, in this embodiment, the flow control valve 18 is provided particularly on the coolant inlet side of the heat exchanger 40. The controller 30A controls the flow control valve 18 based on the temperature of the coolant, thereby adjusts the flow rate of the coolant flown to the heat exchanger 40, and heats up the fuel to the constant temperature. Therefore, the difference (Tc-Tv) between the temperature Tc at which the fuel turns to the supercritical state and the temperature Tv of the fuel that has come out of the heat exchanger 40 becomes constant. Hence, in a steady state, it becomes unnecessary to perform the control for the fuel-heating heater 110 from the controller 30A to change a heating amount in response to variations of the heat exchange amount in the heat exchanger 40. Moreover, by setting the above-described constant temperature, overheat of the fuel by the heat exchanger 40 can also be prevented.

Note that, though the description has been made of the respective embodiments on the premise that the fuel is directly injected into the combustion chamber R from the injector 100, the present invention is not limited to the above. The present invention can also be applied to a system that injects the fuel to an intake system such as an intake manifold of the internal combustion engine.

Moreover, the micro nozzle M that heats the fuel by the Joule heat is provided as the fuel-heating heater 110 on the downstream side of the movable valve 105 of the injector 100; however, an arbitrary heating device such as a device using induction heating can be employed as long as it can heat up the fuel rapidly. Moreover, the fuel-heating heater 110 can also be disposed not only on the downstream side of the movable valve 105 but also on the upstream side thereof.

Furthermore, in the respective embodiments, the pressure sensor 22 and the temperature sensor 23 are provided on the downstream side of the heat exchangers 40 and 40A, that is, on the injector 100 side. However, the pressure sensor 22 may be disposed on an arbitrary spot as long as the spot is on the downstream side of the fuel pump 21. Moreover, the temperature sensor 23 may be disposed on an arbitrary spot as long as the spot is on the downstream side of the heat exchanger.

Furthermore, in the respective embodiments, the fuel pump 21 is disposed on the upstream side of the heat exchangers 40 and 40A. However, the temperature Tv to which the fuel is heated up by the heat exchanger is set at a temperature lower than the boiling point of the fuel in the atmospheric pressure, thus making it possible to dispose the fuel pump on the downstream side of the heat exchanger and very close to the injector. In such a way, the region on the fuel pipe, where the fuel is set at the high temperature and the high pressure, is reduced to a large extent, thus making it possible to enhance reliability of the system.

The entire content of a Japanese Patent Application No. P2006-162758 with a filing date of June 12, 2006 is herein incorporated by reference.

Although the invention has been described above by reference to certain embodiments of the invention, the invention is not limited to the embodiments described above and modifications may become apparent to these skilled in the art, in light of the teachings herein. The scope of the invention is defined with reference to the following claims.

## Claims

1. A fuel injection system of an internal combustion engine (10), comprising:
an injector (100) that injects fuel into an intake system or a combustion chamber (R) of an internal combustion engine (10);
a pressurizing device (21) that pressurizes the fuel to a predetermined pressure;
a first heating device (40, 40A) that heats the fuel on an upstream side of the injector (100);
a second heating device (110) that further heats the fuel heated by the first heating device (40, 40A), the second heating device (110) being provided in the injector (100); and
a control device (30, 30A) that controls the second heating device (110) to heat up the fuel heated by the first heating device (40, 40A) to a predetermined temperature.

2. The fuel injection system of an internal combustion engine (10) according to claim 1,
wherein the first heating device comprises a heat exchanger (40) that exchanges heat between the fuel and a coolant that has flown on the internal combustion engine (10), the heat exchanger (40) having a fuel passage (42) that flows the fuel therethrough, and a coolant passage (41) that flows the coolant therethrough.

3. The fuel injection system of an internal combustion engine (10) according to claim 2,
wherein a flow control valve (18) is provided on a coolant inlet side of the heat exchanger (40), and
the control device (30A) controls the flow control valve (18) based on a temperature of the coolant, adjusts a flow rate of the coolant flown through the heat exchanger (40), and heats up the fuel to a substantially constant temperature.

4. The fuel injection system of an internal combustion engine (10) according to claim 1,
wherein the first heating device comprises a heat exchanger (40A) that has a fuel passage (42A) flowing the fuel therethrough, is provided on an outer wall (11) of the internal combustion engine (10), and further exchanges heat between the outer wall (11) and the fuel.

5. The fuel injection system of an internal combustion engine (10) according to any one of claims 1 to 4,
wherein the pressurizing device (21) is provided on an upstream side of the first heating device (40, 40A).

6. The fuel injection system of an internal combustion engine (10) according to any one of claims 1 to 5,
wherein the injector (100) comprises: a hydraulic chamber (103) that reserves the fuel pressurized by the pressurizing device (21) and heated by the first heating device (40, 40A); a flow rate adjustment hole (104) through which the fuel reserved in the hydraulic chamber (103) is injected; and a movable valve (105) that opens and closes the flow rate adjustment hole (104), and
the second heating device (110) is provided on a downstream side of the movable valve (105).

7. The fuel injection system of an internal combustion engine (10) according to claim 6,
wherein the second heating device (110) comprises a micro nozzle (M) having a conductive substrate (200) provided with at least one through-hole (204) and having outside-drawn electrodes (201) individually provided on front and back surfaces of the conductive substrate (200), and
the micro nozzle (M) flows a current through the conductive substrate (200) by applying electric power to the outside-drawn electrodes (201), thereby heats the fuel injected from the flow rate adjustment hole (104) and passing through the through-hole (204).

8. The fuel injection system of an internal combustion engine (10) according to claim 6 or 7,
wherein the control device (30, 30A) controls the second heating device (110) to heat up the fuel to the predetermined temperature in synchronization with an action of the movable valve (105) in the injector (100).

9. The fuel injection system of an internal combustion engine (10) according to any one of claims 1 to 8,
wherein the predetermined pressure to which the pressurizing device (21) pressurizes the fuel is a pressure (Pc) necessary to set the fuel into a supercritical state, and the predetermined temperature is a temperature (Tc) necessary to set the fuel into the supercritical state, and
the control device (30, 30A) controls the second heating device (110) to heat up the fuel by a difference (Tc-Tv) between the predetermined temperature (Tc) and a temperature (Tv) of the fuel after the fuel is heated by the first heating device (40, 40A).

10. A fuel injection method for injecting fuel by an injector (100) into an intake system or combustion chamber (R) of an internal combustion engine (10), the method comprising:
pressurizing the fuel to a pressure necessary to set the fuel into a supercritical state;
preheating the pressurized fuel on an upstream side of the injector (100);
heating up the preheated fuel to a temperature at which the fuel is set into the supercritical state on a downstream side of a movable valve (105) of the injector (100) in synchronization with an action of the movable valve (105); and
injecting the fuel in the supercritical state into the intake system or the combustion chamber (R).
